# EUROPEAN PATENT SPECIFICATION

(11) **EP 1 970 242 B1**
(45) Date of publication and mention of the grant of the patent: **05.08.2009**
(21) Application number: 07251005.0
(22) Date of filing: 10.03.2007
(51) Int. Cl.: B60K 15/01, F02M 37/22, F16L 41/03

(54) **End cap for a fuel module**
Abschlusskappe für ein Kraftstoffmodul
Embout pour module de carburant

(43) Date of publication of application: 17.09.2008
(73) Proprietor: Delphi Technologies, Inc., Troy, Michigan 48007 (US)
(72) Inventor: Soubiran, Patrick, 4170 Esch-sur-Alzette (LU); Cremer, Hugues, 6600 Bastogne (BE)
(74) Representative: Robert, Vincent

(56) References cited:
- EP-A- 1 010 664
- WO-A-98/10178
- WO-A-20/06097443
- US-A- 5 762 049
- US-A1- 2005 045 159

## Description

The present invention relates to an end cap for a housing of a fuel module for mounting within a vehicle fuel tank.

The fuel system of a vehicle is typically provided with a fuel module mounted within the vehicle fuel tank, the fuel module comprising a modular housing defining a fuel reservoir and containing a plurality of components, such as a fuel pump, a fuel pressure regulator, one or more jet pumps for drawing fuel from one or more pockets of the fuel tank into the reservoir, a fuel filter and/or a fuel level gauge. US 5 762 049 discloses a known fuel module comprising an end cap according to the preamble of claim 1.
In order to reduce costs, it is desirable to provide a modular unit that can be adapted for a number of different applications or configurations.

According to the present invention there is provided an end cap for a fuel module, said end cap comprising a flange for closing an opening in the fuel module or for defining a wall between separate chambers of a fuel module housing, first duct and second ducts extending through said flange for supplying fuel to and removing fuel from the fuel module or between said separate chambers, at least one of said first and second ducts being provided with a plurality of fuel ports on one side of the flange for connection to selected components of the fuel module, at least one of said plurality of fuel ports and/or at least one of said first and second ducts being provided with a removable plug or web to selectively close said at least one fuel port or duct, whereby the end cap be used in a plurality of configurations. The removable plug or web may be formed integrally with the end cap or may comprise a separate component inserted into said at least one of said plurality of fuel ports and/or at least one of said first and second ducts.

In one embodiment, the end cap is adapted to close an open end of a fuel filter housing to separate the fuel filter housing from the remainder of the fuel module housing, said first and second ducts serving to supply fuel to the fuel filter housing and to remove fuel from the fuel filter housing. Preferably said first duct comprises an inlet duct having a first inlet port for communication with an outlet of a fuel pump and an outlet on an opposite side of said flange from said first inlet port, said second duct comprising an outlet duct having an inlet stub for receiving an end of a fuel filter and at least one outlet port on an opposite side of said flange from said inlet stub for communication with a fuel line leading to the engine of the vehicle.

Preferably said second duct is provided with a further port adjacent said outlet port, preferably at a distal end of said second duct, a fuel pressure regulator being connected to or mounted within said further port. Preferably said first duct is provided with a first jet pump at a distal end thereof on the same side of the flange as the first inlet port for drawing fuel into the fuel reservoir of the fuel module from a well or pocket of the fuel tank.

Preferably the first duct is provided with a further port between the first inlet port and the first jet pump, for connection to a further or auxiliary jet pump. Preferably said further port is normally closed by a removable plug or web. A removable plug or web may be provided in the first duct between the first inlet port and the further port.

Preferably the second duct is provided with at least one further outlet port on the same side of the flange as the first outlet port for connection to the further port of the first duct where it is desired to supply a jet pump with filtered fuel, said at least one further outlet port being normally closed by a removable plug or web.

A check valve may be inserted in the outlet of the second duct.

In a second embodiment, the flange of the end cap defines closure of an opening in a fuel module housing, each of said first and second ducts terminates in a pipe connection stub on a side of said flange opposite said one side. Preferably one of said plurality of fuel ports of said one of said first and second ducts has mounted therein, or is connected to, a jet pump.

According to a further aspect of the present invention there is provided a fuel module having a housing and an end cap comprising a flange for closing an opening in the fuel module or for defining a wall between separate chambers of a fuel module housing, first duct and second ducts extending through said flange for supplying fuel to and removing fuel from the fuel module or between said separate chambers, at least one of said first and second ducts being provided with a plurality of fuel ports on one side of the flange for connection to selected components of the fuel module, at least one of said plurality of fuel ports and/or at least one of said first and second ducts being provided with a removable plug or web to selectively close said at least one fuel port or duct, whereby the end cap be used in a plurality of configurations. In one embodiment the end cap defines an end closure of a fuel filter housing. In an alternative embodiment, the end cap defines a closure for an opening of the fuel module housing, the each of said first and second ducts terminating in a pipe connection stub on the exterior of the fuel module housing.

Embodiments of the present invention will now be described, by way of example only, with reference to the accompanying drawings, in which:-
Fig. 1 is a schematic view of a fuel module incorporating an end cap according to a first embodiment of the present invention;
Fig. 2 is an exploded view of the fuel filter apparatus of the fuel module of Fig. 1;
Fig. 3 is a schematic view of the end cap of Fig. 1 in a first configuration;
Fig. 4 is a schematic view of the end cap of Fig. 1 in a second configuration;
Fig. 5 is a schematic view of the end cap of Fig. 1 in a third configuration;
Fig. 6 is a schematic view of the end cap of Fig. 1 in a fourth configuration;
Fig. 7 is a schematic view of an end cap according to a second embodiment of the present invention in a first configuration;
Fig. 8 is a schematic view of the end cap of Fig. 7 in a second configuration;
Fig. 9 is a schematic view of an end cap according to a third embodiment of the present invention in a first configuration; and
Fig. 10 is a schematic view of the end cap of Fig. 9 in a second configuration.

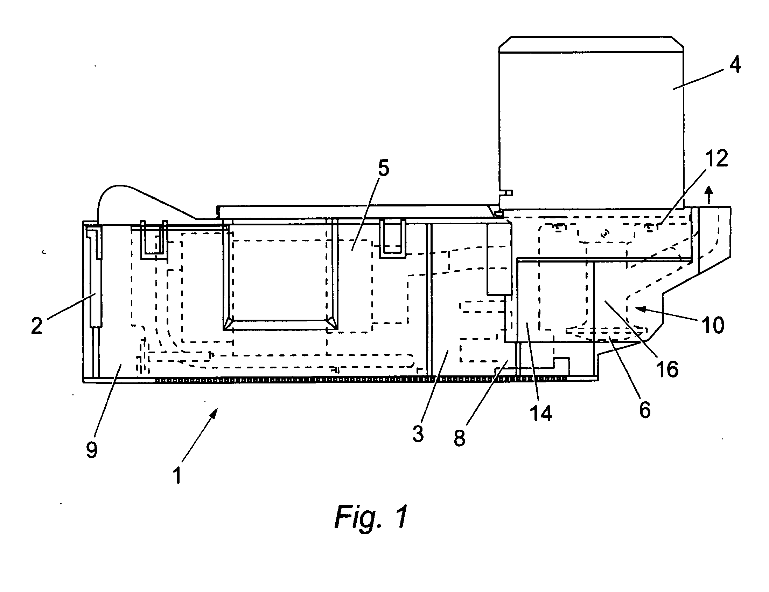

As shown in Fig. 1, a fuel module 1 comprises a main housing 2 defining a fuel reservoir 3 to which is attached a fuel filter housing 4 for enclosing a fuel filter. A fuel pump 5 is mounted within the fuel module main housing 2 and is arranged to draw fuel from the fuel module and pass it through the fuel filter before passing the fuel to the engine of the vehicle. A fuel pressure regulator 6 is provided downstream of the fuel filter and a jet pump 8 is provided for drawing fuel from pockets within the fuel tank into the reservoir 3. An end cap 10 according to a first embodiment of the present invention is provided for closing the fuel filter housing 4 comprising a flange 12 defining a wall or closure between the reservoir 3 of the main housing 2 and the fuel filter housing 4, first and second ducts 14,16 extending through the flange 12 for the transfer of fuel to and from the fuel filter housing 4. As will be described below, the end cap is designed to be used with a number of fuel module configurations for a variety of applications.

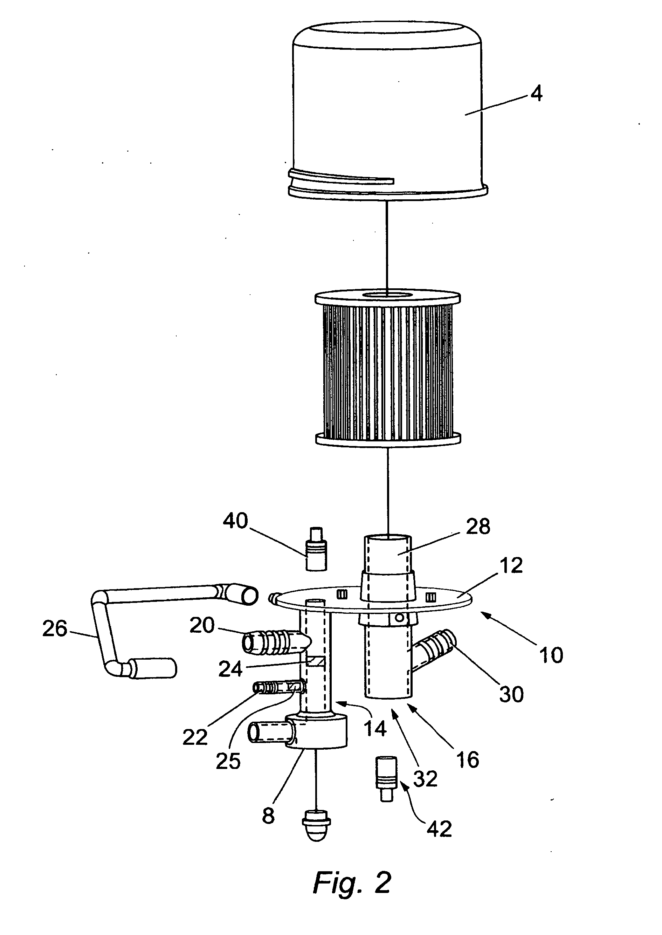

As shown in Fig. 2, the end cap 10 forms a closure for the open end of the fuel filter housing.

The first duct 14 defines an inlet duct for the fuel filter housing 4, having a first pipe connection stub 20 for connection to the outlet of the fuel pump for supplying fuel into the fuel filter housing 4. A second pipe connection stub 22 is provided below the first fuel port, and a jet pump assembly 8 is provided at a distal end of the first duct 14 for drawing fuel into the fuel reservoir 3 form a first fuel pocket of the fuel tank.

Removable webs or plugs 24, 25 are provided in the first duct 14 between the first and second fuel pipe connection stubs and in the second pipe connection stub 22 for selectively preventing the flow of fuel therethrough, whereby the end cap can be selectively configurable for different fuel module configurations, as will be described below. The webs or plugs may be integrally moulded with the end cap and may be removed by suitable means, such as a drill or piercing tool.

The second duct 16 defines an outlet duct for the fuel filter housing 4, one end of the second duct on a first side of the flange 12 facing the interior of the fuel filter housing 4 defining an inlet spigot 28 receivable in an end of the fuel filter. An outlet pipe connection stub 30 is provided on a side of the second duct 16 on the opposite side of the flange 12 to said first side for connection to a fuel line for delivering fuel to the engine of the vehicle. A distal end of the second duct defines an opening 32 for receiving a fuel pressure regulator. Two further fuel ports or drillings are provided in a region of the second duct 16 between the flange 12 and the pipe connection stub 30, said further fuel ports being normally closed by means of a plug or web but being selectively openable to suit different module configurations, as will be described below.

Check valves 40,42 may optionally be inserted into the first and second ducts 14,16 for ensuring unidirectional fuel flow through the first and second ducts 14,16 into and out of the fuel filter housing 4.

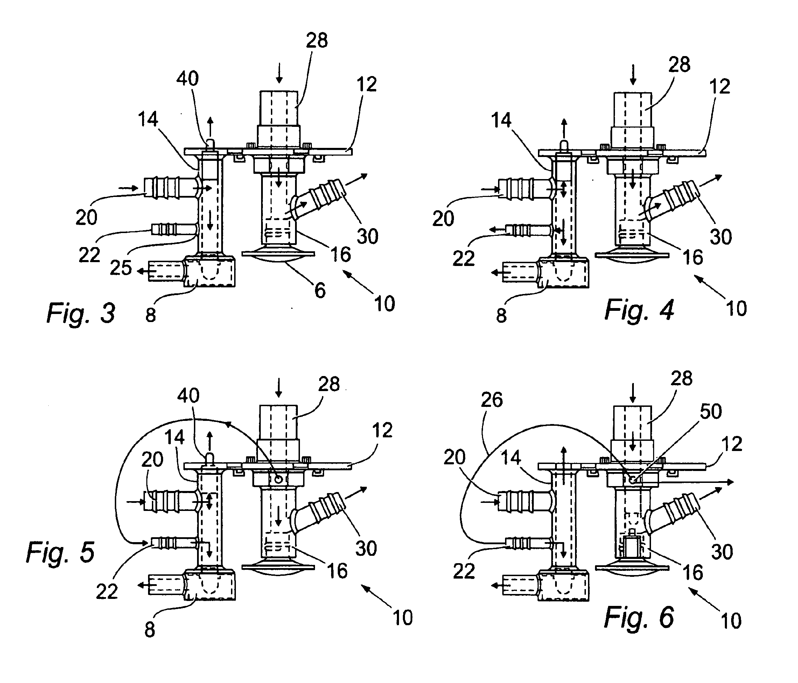

Fig. 3 illustrates the end cap 10 in a first configuration for use with a gasoline fuelled vehicle having a fuel tank with a single fuel pocket requiring only a single jet pump. The first pipe connection stub 20 of the first duct is connected to the outlet of the fuel pump whereby fuel is supplied to the interior of the fuel filter housing via the check valve 40. The web or plug 24 is the first duct 14 is removed whereby fuel also flows down the first duct 14 to the jet pump 8 for drawing fuel into the fuel reservoir from the fuel tank pocket. The web or plug 25 in the second pipe connection stub 22 remains in place to close the second pipe connection stub, which is not required in this configuration. Fuel passes out of the fuel filter housing through the inlet spigot 28 and into the second duct 16, passing out of the outlet pipe connection stub 30 into a fuel line leading to the vehicle engine. Both of the further fuel ports or drillings in the second duct 16 remain closed.

Fig. 4 illustrates the end cap 10 in a second configuration for use with a gasoline fuelled vehicle having a fuel tank with two fuel pockets requiring two jet pumps. The first pipe connection stub 20 of the first duct is connected to the outlet of the fuel pump whereby fuel is supplied to the interior of the fuel filter housing via the check valve 40. The web or plug 24 is the first duct 14 is removed whereby fuel also flows down the first duct 14 to the jet pump 8 for drawing fuel into the fuel reservoir from the first fuel tank pocket. The web or plug 25 in the second pipe connection stub 22 is also removed to allow fuel to flow into the second pipe connection stub 22 which is connected to a second jet pump for drawing from the second fuel pocket of the fuel tank. Fuel passes out of the fuel filter housing through the inlet spigot 28 and into the second duct 16, passing out of the outlet pipe connection stub 30 into a fuel line leading to the vehicle engine. Both of the further fuel ports or drillings in the second duct 16 remain closed.

Fig. 5 illustrates the end cap 10 in a third configuration for use with a gasoline fuelled vehicle having a fuel tank with a single fuel pocket requiring only a single jet pump and it is desired to supply filtered fuel to the jet pump 8. The first pipe connection stub 20 of the first duct is connected to the outlet of the fuel pump whereby fuel is supplied to the interior of the fuel filter housing via the check valve 40. The web or plug 24 in the first duct 14 remains in place whereby fuel is prevented from flowing down the first duct 14 to the jet pump 8. Instead, one of the further fuel ports in the second duct 16 is opened and a further fuel line or connection 26 (see Fig 2) is used to pass fuel from the second duct 16 to the second pipe connection stub 22. The web or plug 25 in the second pipe connection stub 22 is removed to allow fuel to pass into the first duct 14 and into the jet pump 8. Fuel passes out of the fuel filter housing through the inlet spigot 28 and into the second duct 16, passing out of the outlet pipe connection stub 30 into a fuel line leading to the vehicle engine, a portion of the fuel passing through the further fuel port into the fuel line 26 to supply the jet pump 8.

Fig. 6 illustrates the end cap 10 in a third configuration for use with a gasoline fuelled vehicle having a fuel tank with two fuel pockets requiring two jet pumps and it is desired to supply filtered fuel to the jet pumps. The first pipe connection stub 20 of the first duct is connected to the outlet of the fuel pump whereby fuel is supplied to the interior of the fuel filter housing via the check valve 40. The web or plug 24 is the first duct 14 remains in place whereby fuel is prevented from flowing down the first duct 14 to the jet pump 8. Instead, a first further fuel port in the second duct 16 is opened and a further fuel line or connection 26 (see Fig 2) is used to pass fuel from the second duct 16 to the second pipe connection stub 22. The web or plug 25 in the second pipe connection stub 22 is removed to allow fuel to pass into the first duct 14 and into the jet pump 8. Fuel passes out of the fuel filter housing through the inlet spigot 28 and into the second duct 16, passing out of the outlet pipe connection stub 30 into a fuel line leading to the vehicle engine, a portion of the fuel passing through the first further fuel port into the fuel line 26 to supply the jet pump 8. A second further fuel port 50 in the second duct 16 is also opened to supply fuel to a second jet pump for drawing from the second fuel tank pocket into the fuel reservoir.

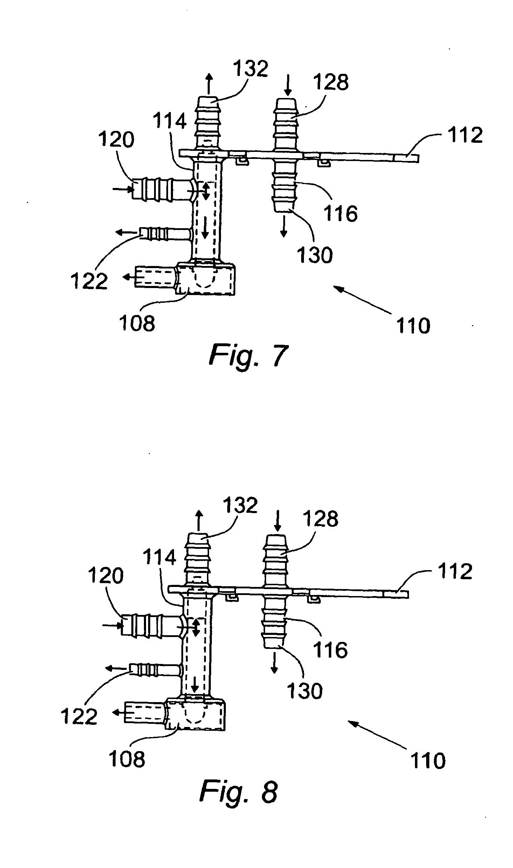

Figs. 7 and 8 illustrate a second embodiment of the present invention for use with a fuel module where an integrated fuel filter and fuel pressure regulator is not required. In this embodiment, the flange 112 of the end cap 110 defines a closure for the main housing 2 of the fuel module. The first duct 114 defines an outlet duct for passing fuel from the fuel pump to the engine and also for passing fuel to one or more jet pumps, as will be described below. The second duct 116 defines an inlet duct for a fuel return from the engine.

The second duct 116 has a first end defining a pipe connection stub 128 for connection to a fuel return line on a first side of the flange 112 and a second end defining an outlet duct on a second, opposite side of the flange 112.

The first duct 114 terminates in an outlet pipe connection stub 132 for connection to a fuel line on said first side of the flange 112. On a second, opposite side of the flange 112, the first duct comprises a first pipe connection stub 120 for connection to the outlet of the fuel pump for supplying fuel to the fuel line connected to the pipe connection stub 132. A second pipe connection stub 122 is provided below the first fuel port, and a jet pump assembly 108 is provided at a distal end of the first duct 114 for drawing fuel into the fuel reservoir form a first fuel pocket of the fuel tank.

A removable webs or plugs 125 is provided in the second fuel pipe connection stub 122 for selectively preventing the flow of fuel therethrough, whereby the end cap can be selectively configurable for different fuel module configurations, as will be described below.

Fig. 7 illustrates the end cap 110 in a first configuration for use with a gasoline fuelled vehicle having a fuel tank with two fuel pockets requiring two jet pumps. The first pipe connection stub 120 of the first duct 114 is connected to the outlet of the fuel pump whereby fuel is supplied to the fuel line connected to the outlet pipe connection stub 132. Fuel also flows down the first duct 114 to the jet pump 108 for drawing fuel into the fuel reservoir from the first fuel tank pocket. The web or plug 125 in the second pipe connection stub 122 is removed to allow fuel to flow into the second pipe connection stub 122 which is connected to a second jet pump for drawing from the second fuel pocket of the fuel tank. Return fuel from the engine can pass into the reservoir through the second duct 116.

Fig. 8 illustrates the end cap 110 in a second configuration for use with a gasoline fuelled vehicle having a fuel tank with only one fuel pocket requiring a single jet pump. In such configuration the web or plug 125 in the second pipe connection stub 122 remains in place to close the second pipe connection stub 122.

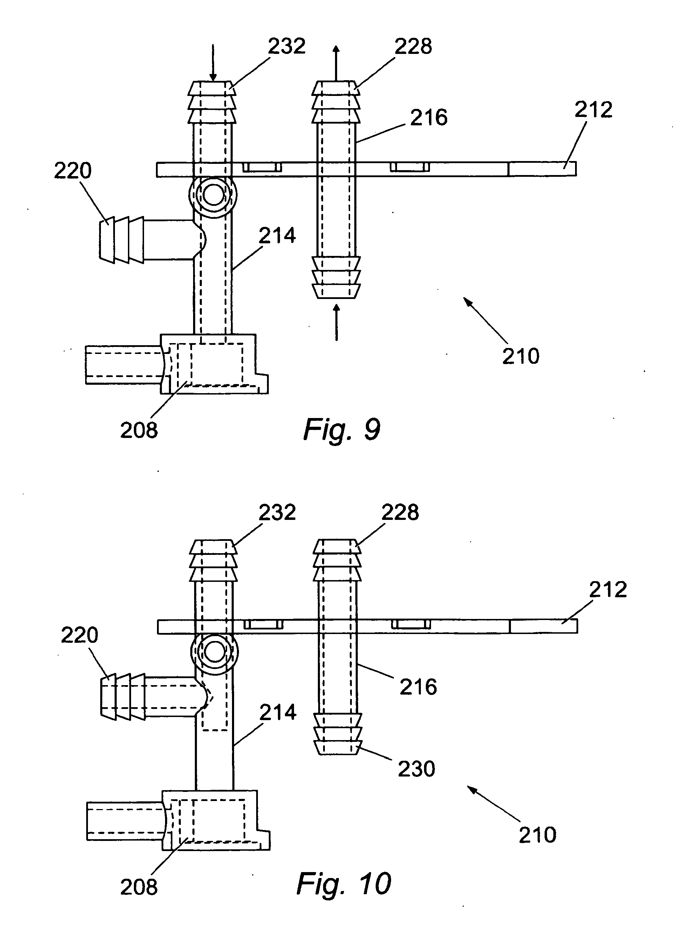

Figs. 9 and 10 illustrate a further embodiment of the present invention more suited for use with a diesel fuelled vehicle. In such applications the fuel filter and fuel pressure regulator are normally provided outside of the fuel module and thus are not required to be integrated into the fuel module.

As with the second embodiment, the flange 212 of the end cap 210 forms a closure of a fuel module opening, rather than a wall between a fuel module main housing and a filter housing. Thus the first and second ducts 214,216 provide means for passing fuel into and out of the fuel module, each terminating in a pipe connection stub 228,232 on the external side of the flange 212 with respect to the fuel module.

The first duct 214 provides a return duct for receiving a return supply of fuel from the engine. The first duct is provided with a jet pump an a lower end thereof and a branch pipe connection stub in a side region, both the jet pump 208 and the branch pipe connection stub 220 being provided on the side of the flange 212 opposite an inlet pipe connection stub 232. Depending on the application, the lower part of the first duct 214 and/or branch pipe connection stub 220 can be plugged or not fully opened to selectively close communication between the branch pipe connection stub 220 and/or the jet pump 208 and the inlet pipe connection stub 232, as will be described below.

In a first configuration, illustrated in Fig. 9, the branch pipe connection stub 220 is closed and the first duct is opened to allow fuel to pass from the inlet pipe connection stub to the jet pump 208. Such configuration can be used where a jet pump is required to draw fuel from a fuel pocket of the fuel tank.

As illustrated in Fig. 10, where the use of the jet pump 208 is not required, the first duct is not fully opened or is plugged to prevent flow from the inlet pipe connection stub 232 to the jet pump 208. In such configuration, the branch pipe connection stub is opened to allow fuel to flow from the inlet connection stub 232 and into the reservoir of the fuel module.

The second duct 216 terminates in an outlet pipe connection stub on an exterior side of the flange 212 and in an inlet pipe connection stub 230 on the opposite side of the flange 212, the inlet pipe connection stub 230 being connectable to a fuel pump within the fuel module, where provided, or merely to a fuel pick up within the reservoir of the fuel module, where no fuel pump is required within the fuel module.

In each of the embodiments of the present invention, the ability to close or at least not open selected flow passageways within the end cap enables a single end cap moulding to be adapted for a number of different fuel system configurations, reducing the number of parts required for different applications and thus reducing cost.

Various modifications and variations to the described embodiments of the inventions will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. An end cap (10) for a fuel module (1), said end cap (10) comprising
a flange (12) for closing an opening in the fuel module or for defining a wall between separate chambers of a fuel module housing, a first duct (14) and a second duct (16) extending through said flange for supplying fuel to and removing fuel from the fuel module or between said separate chambers, at least one of said first and second ducts being provided with
a plurality of fuel ports (20,22,30) on one side of the flange (12) for connection to selected components of the fuel module, **characterised in that** at least one of said plurality of fuel ports and/or at least one of said first and second ducts being provided with a removable plug or web (24,25) to selectively close said at least one fuel port or duct, whereby the end cap be used in a plurality of configurations.

2. An end cap as claimed in claim 1, wherein said removable plug or web (24,25) is formed integrally with, the end cap (10).

3. An end cap as claimed in claim 1, wherein said removable plug or web (24,25) comprises a separate component inserted into said at least one of said plurality of fuel ports (20,22,30) and/or at least one of said first and second ducts (14,16).

4. An end cap as claimed in any preceding claim, wherein the end cap is adapted to close an open end of a fuel filter housing (4) to separate the fuel filter housing (4) from the remainder of the fuel module housing, said first and second ducts (14,16) serving to supply fuel to the fuel filter housing (4) and to remove fuel from the fuel filter housing (4).

5. An end cap as claimed in claim 4, wherein said first duct (14) comprises an inlet duct having a first inlet port (20) for communication with an outlet of a fuel pump and an outlet on an opposite side of said flange (12) from said first inlet port (20), said second duct (16) comprising an outlet duct having an inlet stub (28) for receiving an end of a fuel filter and at least one outlet port (30) on an opposite side of said flange from said inlet stub for communication with a fuel line leading to the engine of the vehicle.

6. A end cap as claimed in claim 5, wherein said second duct (16) is provided with a further port (32) adjacent said outlet port (30), preferably at a distal end of said second duct, a fuel pressure regulator (42) being connected to or mounted within said further port.

7. An end cap as claimed in claim 5 or claim 6, wherein said first duct (14) is provided with a first jet pump (8) at a distal end thereof on the same side of the flange (12) as the first inlet port (20) for drawing fuel into the fuel reservoir of the fuel module from a well or pocket of the fuel tank.

8. An end cap as claimed in claim 7, wherein the first duct (14) is provided with a further port (22) between the first inlet port (20) and the first jet pump (8), for connection to a further or auxiliary jet pump, said further port (22) being normally closed by a removable plug or web (25).

9. An end cap as claimed in claim 8, wherein a removable plug or web (24) is provided in the first duct (14) between the first inlet port (20) and the further port (22).

10. An end cap as claimed in any of claims 5 to 9, wherein the second duct (16) is provided with at least one further outlet port (50) on the same side of the flange (12) as the first outlet port (30) for connection to the further port (22) of the first duct (14) where it is desired to supply a jet pump with filtered fuel, said at least one further outlet port (50) being normally closed by a removable plug or web.

11. An end cap as claimed in ay of claims 1 to 3, wherein the flange of the end cap defines closure of an opening in a fuel module housing, each of said first and second ducts terminates in a pipe connection stub on a side of said flange opposite said one side.

12. An end cap as claimed in claim 11, wherein one of said plurality of fuel ports of said one of said first and second ducts has mounted therein or is connected to a jet pump.

13. A fuel module having a housing and an end cap as claimed in any preceding claim.

## Patentansprüche

1. Endaufsatz (10) für ein Kraftstoffmodul (1), wobei der Endaufsatz (10) aufweist einen Flansch (12) zum Schließen einer Öffnung in dem Kraftstoffmodul oder zum Definieren einer Wand zwischen getrennten Kammern eines Kraftstoffmodulgehäuses, ein erstes Rohr (14) und ein zweites Rohr (16), die sich durch den Flansch erstrecken, zum Liefern von Kraftstoff an das Kraftstoffmodul und zum Entfernen von Kraftstoff aus dem Kraftstoffmodul oder zwischen den getrennten Kammern, wobei zumindest eines der ersten und zweiten Rohre versehen ist mit einer Vielzahl von Kraftstoffanschlüssen (20, 22, 30) an einer Seite des Flansches (12) zur Verbindung mit ausgewählten Komponenten des Kraftstoffmoduls, **dadurch gekennzeichnet, dass** zumindest einer der Vielzahl von Kraftstoffanschlüssen und/oder zumindest eines der ersten und zweiten Rohre versehen ist mit einem entfernbaren Stopfen oder Steg (24, 25), um den zumindest einen Kraftstoffanschluss oder das Rohr selektiv zu schließen, wodurch der Endaufsatz in einer Vielzahl von Konfigurationen verwendet werden kann.

2. Endaufsatz gemäß Anspruch 1, wobei der entfernbare Stopfen oder Steg (24, 25) integral mit dem Endaufsatz (10) ausgebildet ist.

3. Endaufsatz gemäß Anspruch 1, wobei der entfernbare Stopfen oder Steg (24, 25) eine getrennte Komponente aufweist, die in den zumindest einen der Vielzahl von Kraftstoffanschlüssen (20, 22, 20) und/oder zumindest eines der ersten und zweiten Rohre (14, 16) eingeführt wird.

4. Endaufsatz gemäß einem vorhergehenden Anspruch, wobei der Endaufsatz ausgebildet ist, ein offenes Ende eines Kraftstofffiltergehäuses (4) zu schließen, um das Kraftstofffiltergehäuse (4) von dem Rest des Kraftstoffmodulgehäuses zu trennen, wobei die ersten und zweiten Rohre (14, 16) dazu dienen, Kraftstoff an das Kraftstofffiltergehäuse (4) zu liefern und Kraftstoff aus dem Kraftstofffiltergehäuse (4) zu entfernen.

5. Endaufsatz gemäß Anspruch 4, wobei das erste Rohr (14) ein Einlassrohr mit einem ersten Einlassanschluss (20) zur Kommunikation mit einem Auslass einer Kraftstoffpumpe und einen Auslass auf einer gegenüberliegenden Seite des Flansches (12) von dem ersten Einlassanschluss (20) aufweist, wobei das zweite Rohr (16) aufweist ein Auslassrohr mit einer Einlasshalterung (28) zum Aufnehmen eines Endes eines Kraftstofffilters und zumindest einen Auslassanschluss (30) an einer gegenüberliegenden Seite des Flansches von der Einlasshalterung zur Kommunikation mit einer Kraftstoffleitung, die zu dem Motor des Fahrzeugs führt.

6. Endaufsatz gemäß Anspruch 5, wobei das zweite Rohr (16) versehen ist mit einem weiteren Anschluss (32) angrenzend an den Auslassanschluss (30), vorzugsweise an einem entfernten Ende des zweiten Rohres, wobei ein Kraftstoffdruckregler (42) mit dem weiteren Anschluss verbunden ist oder in diesem angebracht ist.

7. Endaufsatz gemäß Anspruch 5 oder Anspruch 6, wobei das erste Rohr (14) versehen ist mit einer ersten Jetpumpe (8) an seinem entfernten Ende auf derselben Seite des Flansches (12) wie der erste Einlassanschluss (20) zum Anziehen von Kraftstoff in das Kraftstoffreservoir des Kraftstoffmoduls aus einem Behälter oder einer Tasche des Kraftstoffbehälters.

8. Endaufsatz gemäß Anspruch 7, wobei das erste Rohr (14) versehen ist mit einem weiteren Anschluss (22) zwischen dem ersten Einlassanschluss (20) und der ersten Jetpumpe (8), zur Verbindung mit einer weiteren oder zusätzlichen Jetpumpe, wobei der weitere Anschluss (22) normalerweise geschlossen ist durch einen entfernbaren Stopfen oder Steg (25).

9. Endaufsatz gemäß Anspruch 8, wobei ein entfernbarer Stopfen oder Steg (24) in dem ersten Rohr (14) zwischen dem ersten Einlassanschluss (20) und dem weiteren Anschluss (22) vorgesehen ist.

10. Endaufsatz gemäß einem der Ansprüche 5 bis 9, wobei das zweiten Rohr (16) versehen ist mit zumindest einem weiteren Auslassanschluss (50) auf derselben Seite des Flansches (12) wie der erste Auslassanschluss (30) zur Verbindung mit dem weiteren Anschluss (22) des ersten Rohres (14), wenn gewünscht ist, eine Jetpumpe mit gefiltertem Kraftstoff zu beliefern, wobei der zumindest eine weitere Auslassanschluss (50) normalerweise geschlossen ist durch einen entfernbaren Stopfen oder Steg.

11. Endaufsatz gemäß einem der Ansprüche 1 bis 3, wobei der Flansch des Endaufsatzes eine Schließung einer Öffnung in einem Kraftstoffmodulgehäuse definiert, wobei jedes der ersten und zweiten Rohre in einem Rohrverbindungsende auf einer Seite des Flansches gegenüberliegend der einen Seite endet.

12. Endaufsatz gemäß Anspruch 11, wobei einer der Vielzahl von Kraftstoffanschlüssen des einen der ersten und zweiten Rohre darin eine Jetpumpe angebracht hat oder mit einer Jetpumpe verbunden ist.

13. Kraftstoffmodul mit einem Gehäuse und einem Endaufsatz gemäß einem der vorhergehenden Ansprüche.

## Revendications

1. Capuchon terminal (10) pour un module de carburant (1), ledit capuchon terminal (10) comprenant une bride (12) pour fermer une ouverture dans le module de carburant ou pour définir une paroi entre des chambres séparées d'un boîtier de module de carburant, un premier conduit (14) et un second conduit (16) s'étendant à travers ladite bride pour fournir du carburant au et enlever du carburant hors du module de carburant ou entre lesdites chambres séparées, l'un au moins dudit premier et dudit second conduit étant équipé d'une pluralité d'orifices de carburant (20, 22, 30) sur un côté de la bride (12) pour la connexion à des composants sélectionnés du module de carburant, **caractérisé en ce que** ledit au moins un parmi ladite pluralité d'orifices de carburant et/ou l'un au moins dudit premier et dudit second conduit sont équipés d'un bouchon ou d'un voile amovible (24, 25) pour sélectivement fermer ledit au moins un orifice de carburant ou conduit, grâce à quoi le capuchon terminal peut être utilisé dans une pluralité de configurations.

2. Capuchon terminal selon la revendication 1, dans lequel ledit bouchon ou ledit voile amovible (24, 25) est formé intégralement avec le capuchon terminal (10).

3. Capuchon terminal selon la revendication 1, dans lequel ledit bouchon ou ledit voile amovible (24, 25) comprend un composant séparé inséré dans ledit au moins un parmi ladite pluralité d'orifices de carburant (20, 22, 30) et/ou au moins un dudit premier et dudit second conduit (14, 16).

4. Capuchon terminal selon l'une quelconque des revendications précédentes, dans lequel le capuchon terminal est adapté à fermer une extrémité ouverte d'un boîtier de filtre à carburant (4) pour séparer le boîtier de filtre à carburant (4) vis-à-vis du reste du boîtier de module de carburant, ledit premier et ledit second conduit (14, 16) servant à fournir du carburant au boîtier de filtre à carburant (4) et à enlever du carburant hors du boîtier de filtre à carburant (4).

5. Capuchon terminal selon la revendication 4, dans lequel ledit premier conduit (14) comprend un conduit d'entrée ayant un premier orifice d'entrée (20) pour une communication avec une sortie d'une pompe à carburant, et une sortie sur un côté opposé de ladite bride (12) vis-à-vis du dit premier orifice d'entrée (20), ledit second conduit (16) comprenant un conduit de sortie ayant un moignon d'entrée (28) pour recevoir une extrémité d'un filtre à carburant et au moins un orifice de sortie (30) sur un côté opposé de ladite bride vis-à-vis dudit moignon d'entrée pour une communication avec un conduit de carburant qui mène au moteur du véhicule.

6. Capuchon terminal selon la revendication 5, dans lequel ledit second conduit (16) est pourvu d'un autre orifice (32) adjacent audit orifice de sortie (30), de préférence à une extrémité distale dudit second conduit, un régulateur de pression de carburant (42) étant connecté audit ou monté à l'intérieur dudit autre orifice.

7. Capuchon terminal selon la revendication 5 ou 6, dans lequel ledit premier conduit (14) est pourvu d'une première pompe de projection (8) à une extrémité distale de lui-même sur le même côté de la bride (12) que le premier orifice d'entrée (20) pour aspirer du carburant vers le réservoir à carburant du module de carburant depuis un puits ou une poche du réservoir à carburant.

8. Capuchon terminal selon la revendication 7, dans lequel le premier conduit (14) est pourvu d'un autre orifice (22) entre le premier orifice d'entrée (20) et la première pompe de projection (8), pour la connexion à une autre pompe de projection ou une pompe de projection auxiliaire, ledit autre orifice (22) étant normalement fermé par un bouchon ou un voile amovible (25).

9. Capuchon terminal selon la revendication 8, dans lequel un bouchon ou un voile amovible (24) est prévu dans le premier conduit (14) entre le premier orifice d'entrée (20) et l'autre orifice (22).

10. Capuchon terminal selon l'une quelconque des revendications 5 à 9, dans lequel le second conduit (16) est pourvu d'au moins un autre orifice de sortie (50) sur le même côté de la bride (12) que le premier orifice de sortie (30) pour la connexion à l'autre orifice (22) du premier conduit (14) lorsqu'on désire alimenter une pompe de projection avec du carburant filtré, ledit au moins un autre orifice de sortie (50) étant normalement fermé par un bouchon ou un voile amovible.

11. Capuchon terminal selon l'une quelconque des revendications 1 à 3, dans lequel la bride du capuchon terminal définit une fermeture d'une ouverture dans un boîtier de module de carburant, chacun dudit premier et dudit second conduit se terminant dans un moignon de connexion tubulaire sur un côté de ladite bride opposé audit premier côté.

12. Capuchon terminal selon la revendication 11, dans lequel un orifice parmi ladite pluralité d'orifices de carburant dudit conduit choisi parmi ledit premier et ledit second conduit comprend une pompe à projection montée à l'intérieur ou est connecté à une telle pompe à projection.

13. Module de carburant comprenant un boîtier et un capuchon terminal selon l'une quelconque des revendications précédentes.
